# EUROPÄISCHE PATENTSCHRIFT

(11) **EP 3 593 165 B1**
(45) Veröffentlichungstag und Bekanntmachung des Hinweises auf die Patenterteilung: **06.07.2022**
(21) Anmeldenummer: 18710443.5
(22) Anmeldetag: 08.03.2018
(51) Int. Cl.: G01S 15/931, G01S 7/52, G01S 7/527

(54) **VERFAHREN ZUM BESTIMMEN EINES FUNKTIONSZUSTANDS EINES ULTRASCHALLSENSORS MITTELS EINER ÜBERTRAGUNGSFUNKTION DES ULTRASCHALLSENSORS, ULTRASCHALLSENSORVORRICHTUNG SOWIE KRAFTFAHRZEUG**
METHOD FOR DETERMINING THE FUNCTIONAL STATE OF AN ULTRASONIC SENSOR USING A TRANSMISSION FUNCTION OF THE ULTRASONIC SENSOR, ULTRASONIC SENSOR DEVICE, AND MOTOR VEHICLE
PROCÉDÉ DE DÉTERMINATION D'UN ÉTAT FONCTIONNEL D'UN CAPTEUR À ULTRASONS AU MOYEN D'UNE FONCTION DE TRANSFERT DU CAPTEUR À ULTRASONS, DISPOSITIF À CAPTEUR À ULTRASONS ET VÉHICULE AUTOMOBILE

(30) Priorität: 09.03.2017 DE 102017105043
(43) Veröffentlichungstag der Anmeldung: 15.01.2020
(73) Patentinhaber: Valeo Schalter und Sensoren GmbH, 74321 Bietigheim-Bissingen (DE)
(72) Erfinder: HAAG, Fabian, 74321 Bietigheim-Bissingen (DE)
(74) Vertreter: Enge, Sebastian
(86) Internationale Anmeldenummer: PCT/EP2018/055806
(87) Internationale Veröffentlichungsnummer: WO 2018/162659

(56) Entgegenhaltungen:
- DE-A1-102012 200 743
- DE-A1-102012 220 311
- DE-A1-102014 115 000
- DE-A1-102014 213 122

## Beschreibung

Die Erfindung betrifft ein Verfahren zum Bestimmen eines Funktionszustands eines Ultraschallsensors einer Ultraschallsensorvorrichtung für ein Kraftfahrzeug, welche zum Aussenden eines Ultraschallsignals in eine Umgebung des Kraftfahrzeugs und/oder zum Empfangen eines Echosignals des Ultraschallsignals ausgebildet ist. Ferner betrifft die Erfindung eine Ultraschallsensorvorrichtung sowie ein Kraftfahrzeug. Ultraschallsensoren an Kraftfahrzeugen sind insbesondere zur Distanzmessung von Objekten ausgebildet. Bei Ultraschallsensoren findet insbesondere eine elektro-akustische Energiewandlung statt. Unabhängig vom physikalischen Prinzip dieser Energiewandlung, das unter anderem mechanisch-induktiver, mechanisch-kapazitiver, mechanisch-restriktiver, magnetisch-restriktiver oder elektrostriktiver Natur sein kann, besteht bei jedem energiewandelnden Element die Möglichkeit, intern oder extern induzierten Veränderungen ausgesetzt zu sein, die je nach Stärke zu einer Verfälschung des Messergebnisses oder einem kompletten Sensor-Ausfall führen können. Im Stand der Technik wird ein solcher Sensor-Ausfall meist durch Plausibilitätsüberprüfungen von dem sensorbetriebenen System festgestellt. Sensor-Veränderungen dagegen werden nicht detektiert.

DE102014115000 offenbart ein Verfahren zur Diagnose von Ultraschallsensoren, das im normalen Betrieb durchgeführt wird, wobei zunächst ein Signal zum Aussenden von Ultraschall an den Sensor angelegt wird. Die DE 10 2014 115 000 A1 offenbart ein Verfahren zum Betreiben einer Ultraschallsensorvorrichtung eines Kraftfahrzeugs, bei welchem in einem Messbetrieb zum Erfassen eines Objekts in einem Umgebungsbereich des Kraftfahrzeugs ein Wandler eines Ultraschallsensors zum Aussenden eines Ultraschallsignals mittels einer Sendestufe mit einem Sendesignal angeregt wird. Mittels einer Empfangsstufe wird anhand eines von dem Wandler erzeugten Signals ein Messsignal bereitgestellt. Während des Messbetriebs wird mittels einer Diagnoseeinrichtung eine Funktionsfähigkeit der Ultraschallsensorvorrichtung anhand des Sendesignals und/oder des Messsignals überprüft. Im Stand der Technik wird anhand des ausgesendeten Ultraschallsignals und des empfangenen Echosignals auf die Funktionsfähigkeit des Ultraschallsensors geschlossen. Nachteilig hierbei ist, dass insbesondere das Ultraschallsignal und das Echosignal von Umwelteinflüssen abhängig sind, sodass eine genaue Diagnose des Ultraschallsensors auf Basis des ausgesendeten Ultraschallsignals und des empfangenen Echosignals mit Fehlern behaftet ist.

Aufgabe der vorliegenden Erfindung ist es, ein Verfahren, eine Ultraschallsensorvorrichtung sowie ein Kraftfahrzeug aufzuzeigen, mittels welchem beziehungsweise mittels welcher zumindest ein Funktionszustand des Ultraschallsensors besser bestimmt werden kann.

Diese Aufgabe wird durch ein Verfahren, eine Ultraschallsensorvorrichtung sowie ein Kraftfahrzeug gemäß den unabhängigen Ansprüchen gelöst.

Ein Aspekt der Erfindung betrifft ein Verfahren zum Bestimmen eines Funktionszustands eines Ultraschallsensors einer Ultraschallsensorvorrichtung für ein Kraftfahrzeug, welche zum Aussenden eines Ultraschallsignals in eine Umgebung des Kraftfahrzeugs und/oder zum Empfangen eines Echosignals des Ultraschallsignals ausgebildet ist.

Dazu wird ein elektrisches Prüfsignal erzeugt, welches an den Ultraschallsensor angelegt wird, wobei zumindest eine durch das elektrische Prüfsignal beeinflusste elektrische Kenngröße des Ultraschallsensors ausgewertet wird. Abhängig von dieser Auswertung wird eine Übertragungsfunktion des Ultraschallsensors bestimmt, die mit einer Referenz-Übertragungsfunktion verglichen wird. Abhängig von dem Vergleich wird der Funktionszustand des Ultraschallsensors bestimmt. Die Referenz-Übertragungsfunktion charakterisiert einen Referenz-Funktionszustand.

Insbesondere kann dadurch der Funktionszustand des Ultraschallsensors direkt und somit nicht, durch beispielsweise Umwelteinflüsse verfälscht, bestimmt werden. Insbesondere ist es dadurch möglich, eine genauere Bestimmung des Funktionszustands des Ultraschallsensors durchzuführen, so dass der Ultraschallsensor nicht nur auf Ausfall beziehungsweise Funktionstüchtigkeit überprüft werden kann, sondern auch weitere Funktionszustände wie beispielsweise ein Verschmutzungsgrad beziehungsweise ein Vereisungsgrad des Ultraschallsensors bestimmt werden kann.

Die Bestimmung des Funktionszustands wird somit sensorintern durchgeführt, was auch bedeutet, dass für diese Funktionsprüfung kein Aussenden eines Ultraschallsignals des zu prüfenden Ultraschallsensors mehr erfolgen muss und auch kein auszuwertendes Echosignal empfangen werden muss.

Die Ultraschallsensor-Übertragungsfunktion beschreibt insbesondere die mathematische Beziehung zwischen dem Ein-und dem Ausgangssignal des Ultraschallsensors.

Insbesondere werden somit die elektro-mechanischen Eigenschaften des Ultraschallsensors beschrieben. Mittels der Übertragungsfunktion kann für ein beliebiges Eingangssignal das entsprechende Ausgangssignal, das heißt die Reaktion des Ultraschallsensors auf das Ausgangssignal, bestimmt werden. Da insbesondere die Ultraschallsensoren im Resonanzbetrieb betrieben werden, ist die Übertragungsfunktion des Ultraschallsensors bei der Resonanzfrequenz von besonderer Bedeutung.

Insbesondere kann vorgesehen sein, dass für die Ultraschallsensorvorrichtung ein Funktionszustandsbestimmungsmodell bereitgestellt wird.

Insbesondere kann vorgesehen sein, dass nach einer Bestimmung eines Funktionszustands eine entsprechende Maßnahme durchgeführt wird. Beispielsweise kann bei einem Defekt des Ultraschallsensors ein Warnhinweis erzeugt werden, so dass eine Person im Kraftfahrzeug darauf hingewiesen wird, dass der Ultraschallsensor zumindest in seiner Funktionalität eingeschränkt ist. Ebenfalls möglich ist, dass bei einer erkannten Vereisung des Ultraschallsensors beispielsweise ein Heizelement des Ultraschallsensors angesteuert wird, um die Vereisung zu entfernen. Sollte, beispielsweise aufgrund von Alterung einer Keramik eines Piezo-Ultraschallwandlers, nicht mehr der erforderliche Schalldruck bei einer bestimmten Leistung erbracht werden können, so kann durch eine Steuerungseinrichtung des Ultraschallwandlers beispielsweise die Leistung entsprechend erhöht werden, so dass ein zuverlässiger Weiterbetrieb des Ultraschallsensors dennoch realisiert werden kann.

Insbesondere kann in einem ersten Betriebszustand des Ultraschallsensors zumindest ein Ultraschallsignal ausgesendet und ein Echosignal empfangen werden und in einem vom ersten Betriebszustand unterschiedlichen zweiten Betriebszustand des Ultraschallsensors eine Selbst-Diagnose des Ultraschallsensors durch Anlegen des elektrischen Prüfsignals durchgeführt wird. Somit wird in dem ersten Betriebszustand, quasi dem Normalbetrieb, wie üblich ein Ultraschallsignal ausgesendet und ein entsprechendes von einem Objekt reflektiertes Echosignal empfangen. Hierzu kann insbesondere ein Anregungssignal, durch das dann das ausgesendetes Ultraschallsignal erzeugt wird, an den Piezo des Ultraschallwandlers bzw. die elektronischen Schaltung des Piezos (insbesondere Koppelnetzwerk des Piezos) angelegt werden. Der zweite Betriebszustand kann auch als Diagnosebetrieb bezeichnet werden. Im zweiten Betriebszustand wird dann eine Selbst-Diagnose des Ultraschallsensors durchgeführt ohne ein Ultraschallsignal in die Umgebung des Kraftfahrzeugs zu senden (im Gegensatz zum ersten Betriebszustand). Mit anderen Worten erfordert die Selbst-Diagnose kein Aussenden von Schall.

### Erfindungsgemäß unterscheidet sich das

Prüfsignal sich von einem Anregungssignal, durch das ein ausgesendetes Ultraschallsignal erzeugt wird. Vor allem kann das Prüfsignal des zweiten Betriebszustands sich von dem Anregungssignal, durch das das ausgesendete Ultraschallsignal des ersten Betriebszustands erzeugt wird, unterscheiden. Somit unterscheidet sich das Prüfsignal des Diagnosebetriebs vom Anregungssignal des ausgendeten Ultraschallsignals im Normalbetrieb wesentlich in seinen Signaleigenschaften.

Erfindungsgemäß ist eine Amplitude des Prüfsignals kleiner als eine Amplitude des Anregungssignals. Vor allem kann die Amplitude des Prüfsignals des zweiten Betriebszustands kleiner sein als die Amplitude des Anregungssignals, durch das das ausgesendete Ultraschallsignal des ersten Betriebszustands erzeugt wird. Beispielsweise kann die Amplitude des Prüfsignals um einen Faktor von mindestens 2 (d.h. mindestens die Hälfte) kleiner sein als die Amplitude des Anregungssignals, insbesondere um einen Faktor von mindestens 5 kleiner, insbesondere um einen Faktor von mindestens 10 kleiner.

In einer alternativen oder kumulativen Ausführungsform kann eine Bandbreite des Prüfsignals größer ist als eine Bandbreite des Anregungssignals. Vor allem kann die Bandbreite des Prüfsignals des zweiten Betriebszustands größer sein als die Bandbreite des Anregungssignals, durch das das ausgesendete Ultraschallsignal des ersten Betriebszustands erzeugt wird. Zum Beispiel kann die Bandbreite des Prüfsignals zwischen 10 und 50 kHz sein, insbesondere zwischen 15 und 25 kHz, und/oder die Bandbreite des Anregungssignals kann zwischen 2 und 20 KHz, insbesondere zwischen 5 und 10 kHz sein. Somit kann die Bandbreite des Prüfsignals beispielsweise um einen Faktor von mindestens 2 größer sein (d.h. mindestens doppelt so groß) als die Bandbreite des Anregungssignals.

In einer alternativen oder kumulativen Ausführungsform enthält ein Frequenzband des Prüfsignals die Resonanzfrequenz des Ultraschallsensors, insbesondere kann das Frequenzband des Prüfsignals symmetrisch um die Resonanzfrequenz liegen. Alternativ oder kumulativ kann ein Frequenzband des Anregungssignals die Resonanzfrequenz des Ultraschallsensors nicht enthalten bzw. neben der Resonanzfrequenz liegen, insbesondere kann das Frequenzband des Anregungssignals asymmetrisch zur Resonanzfrequenz liegen.

Gemäß einer vorteilhaften Ausgestaltungsform kann das Prüfsignal als harmonisches Signal oder als Sprungsignal oder als Impulssignal von einer Steuerungseinrichtung erzeugt werden. Bei dem harmonischen Signal handelt es sich um eine Schwingung, deren Verlauf durch eine Sinus-Funktion beschrieben werden kann. Somit wird der Ultraschallsensor mit einem elektrischen Prüfsignal angeregt, welches einer Sinusfunktion entsprechen kann. Insbesondere kann die Frequenz über die Zeit im relevanten Bereich variiert werden. Bei dem Sprungsignal handelt es sich um eine weitere Möglichkeit, den Ultraschallsensor auf seinen Funktionszustand zu überprüfen. Es wird an einem Eingang einer elektronischen Schaltung des Ultraschallsensors (insbesondere einer elektronischen Schaltung des Piezos, z.B. einem Koppelnetzwerk des Piezos) eine Sprungfunktion angelegt, welche dann am Ausgang des Ultraschallsensors ebenfalls eine Veränderung der Spannung zur Folge hat. Der zeitliche Verlauf dieser Spannung ist auch als Sprungantwort bezeichnet. In Abhängigkeit von der Sprungfunktion kann auf den Funktionszustand des Ultraschallsensors geschlossen werden. Ebenfalls möglich ist, dass ein Impulssignal als Prüfsignal von der Steuerungseinrichtung erzeugt wird. Beim Impulssignal wird der Ultraschallsensor elektrisch angeregt und das Schwingungsverhalten des Ultraschallsensors elektrisch beobachtet und anhand des Schwingungsverhaltens können Rückschlüsse auf den Funktionszustand des Ultraschallsensors bestimmt werden. Durch die Anregung des Ultraschallsensors mit einem harmonischen Signal oder mit einem Sprungsignal oder mit einem Impulssignal als Prüfsignal kann somit auf einfache Art und Weise direkt eine Selbst-Diagnose des Ultraschallsensors durchgeführt werden ohne ein Ultraschallsignal in die Umgebung des Kraftfahrzeugs zu senden.

Es hat sich weiterhin als vorteilhaft erwiesen, wenn die Übertragungsfunktion abhängig von einem Impedanzfrequenzgang bestimmt wird. Insbesondere handelt es sich bei dem Impedanzfrequenzgang um den Eingangs-Impedanzfrequenzgang des elektro-mechanischen Ultraschallsensors. Dies hat den Vorteil, dass sehr einfach die Übertragungsfunktion des Ultraschallsensors bestimmt werden kann, da insbesondere entweder die elektrische Spannung oder der elektrische Strom eine bekannte Beziehung zu den mechanischen Größen des Ultraschallsensors aufweisen. Somit lässt sich mit der Veränderung nur eines Parameters innerhalb des Ultraschallsensors der ImpedanzFrequenzgang bestimmen, wodurch dann wiederum die Übertragungsfunktion des Ultraschallsensors bestimmt werden kann.

Ebenfalls vorteilhaft ist, wenn der Impedanzfrequenzgang in Abhängigkeit von einem eingeprägten Strom als elektrisches Prüfsignal, einer davon abhängigen gemessenen Spannung als elektrische Kenngröße und eines als elektrische Kenngröße ausgebildeten Phasenwinkels des eingeprägten Stroms zur gemessenen Spannung bestimmt wird. Mittels dieser Ausgestaltungsform lässt sich mit hoher Genauigkeit die Strom-Spannungs-Übertragungsfunktion des Ultraschallsensors bestimmen.

Es hat sich weiterhin als vorteilhaft erwiesen, wenn der Impedanzfrequenzgang in Abhängigkeit von einer eingeprägten Spannung als elektrisches Prüfsignal, einem davon abhängigen gemessenen Strom als elektrische Kenngröße und eines als elektrische Kenngröße ausgebildeten Phasenwinkels der eingeprägten Spannung zum gemessenen Strom bestimmt wird. Mittels dieser Ausgestaltungsform lässt sich mit hoher Genauigkeit die Spannungs-Strom Übertragungsfunktion des Ultraschallsensors bestimmen.

Gemäß einer weiteren vorteilhaften Ausgestaltungsform kann die Übertragungsfunktion bei der Resonanzfrequenz des Ultraschallsensors bestimmt werden. Da Ultraschallsensoren insbesondere als Ultraschallsensoren mit Biegewandler auf Piezo-Basis ausgebildet sind, weisen diese insbesondere im Resonanzbetrieb die größte Effizienz auf, sodass der Ultraschallsensor insbesondere im Resonanzbetrieb betrieben wird. Insbesondere kann dann bei der Bestimmung der Übertragungsfunktion im Resonanzbetrieb, sprich bei der Resonanzfrequenz des Ultraschallsensors, der Funktionszustand des Ultraschallsensors bestimmt werden. Dadurch muss nicht für jede Frequenz eine jeweilige Übertragungsfunktion des Ultraschallsensors bestimmt werden, sondern die Bestimmung findet bei der Resonanzfrequenz des Ultraschallsensors statt, wodurch insbesondere Rechenleistung der Steuerungseinrichtung eingespart werden kann.

Es hat sich weiterhin als vorteilhaft erwiesen, wenn eine Mehrzahl von Übertragungsfunktionen bei einer Mehrzahl von Schallfrequenzen bestimmt wird, wobei die Mehrzahl von Schallfrequenzen in einem Frequenzband zwischen einem +/- Δf um die Resonanzfrequenz fᵣₑₛ erzeugt werden. Da jeder Ultraschallsensor aufgrund seiner Bauart eine unterschiedliche Resonanzfrequenz besitzt, kann somit insbesondere in einem Frequenzband um die Resonanzfrequenz fᵣₑₛ eines Referenzultraschallsensors herum die jeweilige Übertragungsfunktion bestimmt werden. Beispielsweise kann ein Referenzultraschallsensor eine Resonanzfrequenz fᵣₑₛ von 45 kHz aufweisen. Aus herstellungsbedingten Toleranzen kann die Resonanzfrequenz des Ultraschallsensors jedoch um +/-Δf schwanken. Beispielsweise kann ein Frequenzband von +/- 5 kHz, sprich von 40 kHz bis 50 kHz, um die Resonanzfrequenz fᵣₑₛ von 45 kHzerzeugt werden, in welchem die Übertragungsfunktion bestimmt wird. Das Δf kann insbesondere den Herstellungstoleranzen des Ultraschallsensors entsprechen. Somit kann besonders zuverlässig und ultraschallsensorspezifisch die Übertragungsfunktion bestimmt werden und dadurch auf den Funktionszustand des spezifischen Ultraschallsensors Rückschlüsse gezogen werden. Des Weiteren können Frequenzen, die außerhalb des Frequenzbands liegen unberücksichtigt bleiben, so dass ebenfalls Rechenleistung eingespart werden kann.

Gemäß einer weiteren vorteilhaften Ausgestaltungsform kann ein elektrisches Modell beziehungsweise ein Ersatzschaltbild des Ultraschallsensors mit einer Mehrzahl von elektrischen Bauelementen erzeugt werden, wobei das elektrische Modell den mechanischen Ultraschallsensors elektrisch beschreibt, wobei Parameterwerte des elektrischen Modells durch die Übertragungsfunktion charakterisiert werden. Insbesondere kann dann durch einen Vergleich der Mehrzahl von elektrischen Bauelementen mit einer Mehrzahl von elektrischen Bauelementen, die die Referenz-Übertragungsfunktion beschreiben, der Funktionszustand des Ultraschallsensors bestimmt werden. Dadurch kann auf einfache Weise und genaue eine Quantifizierung des Funktionszustands des Ultraschallsensors auf Basis von elektrischen Bauelementen durchgeführt werden.

Ebenfalls vorteilhaft ist, wenn das elektrische Modell des Ultraschallsensors und/oder des Referenzultraschallsensors durch einen ersten Kondensator, einen zum ersten Kondensator separaten zweiten Kondensator, einer Induktivität und einen ohmschen Widerstand gebildet wird, wobei der zweite Kondensator, die Induktivität und der ohmsche Widerstand in Serie verschaltet werden und der erste Kondensator parallel zu der Serienschaltung geschaltet wird. Dadurch ist mittels eines einfachen Ersatzschaltbilds der Ultraschallsensor beschrieben. Bei den elektrischen Bauelementen dieses Ersatzschaltbilds handelt es sich um einfache elektrische Bauelemente, deren Werte einfach bestimmt werden können, wodurch auf den Funktionszustand des Ultraschallsensors einfach Rückschluss gezogen werden kann. Dadurch, dass sich jedes der elektrischen Bauelemente elektrisch unterschiedlich verhält, kann somit eine Vielzahl von Funktionszuständen, welche abhängig ist von einer Vielzahl von Einflüssen, des Ultraschallsensors abgebildet werden, so dass eine präzise Bestimmung des aktuellen Funktionszustands des Ultraschallsensors realisiert werden kann.

Es hat sich weiterhin als vorteilhaft erwiesen, wenn eine physikalische Kapazität des Ultraschallsensors mittels des ersten Kondensators, eine mechanische Nachgiebigkeit einer Membran des Ultraschallsensors mittels des zweiten Kondensators, eine bewegende Masse der Membran durch die Induktivität und eine Dämpfung des Schallsignals mittels des ohmschen Widerstands beschrieben werden. Insbesondere kann mittels der physikalischen Kapazität, der mechanischen Nachgiebigkeit, der bewegenden Masse und der Dämpfung der zumindest eine Funktionszustand des Ultraschallsensors bestimmt werden. Beispielsweise kann mittels einer Änderung des ersten Kondensators, sprich der physikalischen Kapazität, ein Defekt der Piezo-Keramik bestimmt werden. Beispielsweise bei der Verringerung der ersten Kapazität des ersten Kondensators kann ein solcher Defekt vorliegen.

Insbesondere beschreiben der zweite Kondensator, die Induktivität und der ohmsche Widerstand das elektro-akustische Modell der Schallwandlung des Ultraschallsensors. Bei einer Veränderung der Kapazität des zweiten Kondensators, mit anderen Worten der mechanischen Nachgiebigkeit bzw. dem Reziprokwert der Steifigkeit, kann beispielsweise auf eine Vereisung des Ultraschallsensors geschlossen werden, da die Nachgiebigkeit nachlässt, sobald Eis auf einer Membran des Ultraschallsensors ist. Insbesondere bei Eis auf der Membran ändert sich ebenfalls die sich bewegende Masse der Membran, welche durch die Induktivität dargestellt ist, sodass insbesondere bei Eis sich auch die Induktivität ändert. Ebenfalls möglich ist, dass bei Verschmutzung des Ultraschallsensors, mit anderen Worten ist Schmutz auf der Membran des Ultraschallsensors, eine zusätzliche Masse auf der Membran des Ultraschallsensors angeordnet ist, sodass sich hier ebenfalls die Induktivität verändert. Durch den ohmschen Widerstand ist insbesondere die Dämpfung des Ultraschallsignals in der Umgebung erfassbar, wobei die Dämpfung insbesondere durch eine Luftschalldämpfung stattfindet, welche insbesondere abhängig von einer Außentemperatur und einer Luftfeuchtigkeit ist.

Ebenfalls vorteilhaft ist, wenn jeweilige Parameterwerte der ersten Kapazität, der zweiten Kapazität, der Induktivität und des ohmschen Widerstands des Ultraschallsensors mittels einer Parameterwertanpassung, insbesondere mittels einer numerischen Optimierung, derart bestimmt werden, dass sich mit diesen angepassten Parameterwerten die Übertragungsfunktion modellmäßig ergibt. Insbesondere mittels eines Parameterfits, welches die Parameteranpassung ist, in Form der numerischen Optimierung des Parameterfits ist es sehr einfach möglich, die Parameterwerte der entsprechenden elektrischen Bauelemente zu bestimmen, wodurch sich schnell und einfach der Fuktionszustand des Ultraschallsensors bestimmen lässt.

Es hat sich weiterhin als vorteilhaft erwiesen, wenn die Referenz-Übertragungsfunktion und/oder Parameterwerte eines die Referenz-Übertragungsfunktion ergebenden Referenzultraschallsensors für eine Mehrzahl an potentiellen Funktionszuständen auf einem Speichermedium der Ultraschallsensorvorrichtung abgespeichert werden. Mittels dieser Ausgestaltungsform kann eine hohe Genauigkeit der Funktionszustandsbestimmung realisiert werden. Insbesondere können dann unterschiedliche Umwelteinflüsse, Alterungseinflüsse bzw. Sensoreinflüsse beziehungsweise die Veränderungen der Übertragungsfunktion aufgrund dieser Einflüsse mit auf dem Speichermedium abgespeichert werden, sodass für eine Vielzahl von potentiellen Situationen im Alltag der Funktionszustand des Ultraschallsensors präzise bestimmt werden kann. Dadurch lässt sich insbesondere der Ultraschallsensor sicher und zuverlässig betreiben.

Weiterhin vorteilhaft ist, wenn das Verfahren bei einer Mehrzahl von Betriebsarten des Kraftfahrzeugs, insbesondere bei dem Fahrbetrieb des Kraftfahrzeugs durchgeführt werden kann. Somit kann realisiert werden, dass die Bestimmung des Funktionszustands bei mehreren Betriebsarten des Kraftfahrzeugs durchgeführt werden kann. Somit kann insbesondere der Ultraschallsensor zuverlässig und funktionssicher im Fahrbetrieb und weiteren Betriebsarten betrieben werden.

Insbesondere kann vorgesehen sein, dass eine Information zumindest eines weiteren Sensors, wie beispielsweise eines Temperatursensors und/oder eines Luftfeuchtigkeitssensors und/oder weiterer Sensorarten, mit bei der Funktionszustandsbestimmung berücksichtigt wird. Der zumindest eine weitere Sensor kann Teil des Ultraschallsensors und/oder der Ultraschallsensorvorrichtung und/oder des Kraftfahrzeugs sein.

Ferner betrifft die Erfindung eine Ultraschallsensorvorrichtung mit zumindest einem Ultraschallsensor für ein Kraftfahrzeug, mit einer Sendeeinrichtung zum Senden von Ultraschallsignalen, mit einer Empfangseinrichtung zum Empfangen eines Echosignals der Ultraschallsignale und mit einer Steuerungseinrichtung des Ultraschallsensors, welche dazu ausgebildet ist, ein zuvor beschriebenes Verfahren bzw. eine vorteilhafte Ausführungsform davon durchzuführen.

Die Erfindung betrifft ebenfalls ein Kraftfahrzeug mit einer Ultraschallsensorvorrichtung. Insbesondere ist das Kraftfahrzeug als Personenkraftwagen ausgebildet.

Vorteilhafte Ausführungsformen des erfindungsgemäßen Verfahrens sind als vorteilhafte Ausführungsformen der erfindungsgemäßen Ultraschallsensorvorrichtung und des erfindungsgemäßen Kraftfahrzeugs anzusehen, wobei die erfindungsgemäße Ultraschallsensorvorrichtung und das erfindungsgemäße Kraftfahrzeug dazu gegenständliche Merkmale aufweisen, die eine Durchführung des Verfahrens oder einer vorteilhafte Ausführungsform davon ermöglichen.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur der jeweils angegebenen Kombination sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch aus den separierten Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungsformen als offenbart anzusehen, die über die in den Rückbezügen der Ansprüche dargelegten Merkmalskombinationen hinausgehen oder abweichen.

Ausführungsbeispiele der Erfindung werden nachfolgend anhand schematischer Zeichnungen näher erläutert.

Dabei zeigen:
- Fig. 1: eine schematische Draufsicht auf ein Ausführungsbeispiel eines erfindungsgemäßen Kraftfahrzeugs mit einer Ausführungsform einer erfindungsgemäßen Ultraschallsensorvorrichtung;
- Fig. 2: ein schematisches Frequenz-Signalstärke-Diagramm zur Bestimmung einer Übertragungsfunktion einer Ausführungsform eines Ultraschallsensors;
- Fig. 3: ein schematisches Frequenz-Impedanz-Diagramm zur Bestimmung eines Impedanzfrequenzgangs einer Ausführungsform eines Ultraschallsensors; und
- Fig. 4: ein schematisches Ersatzschaltbild einer Ausführungsform eines Ultraschallsensors.

In den Figuren werden gleiche oder funktionsgleiche Elemente mit den gleichen Bezugszeichen versehen.

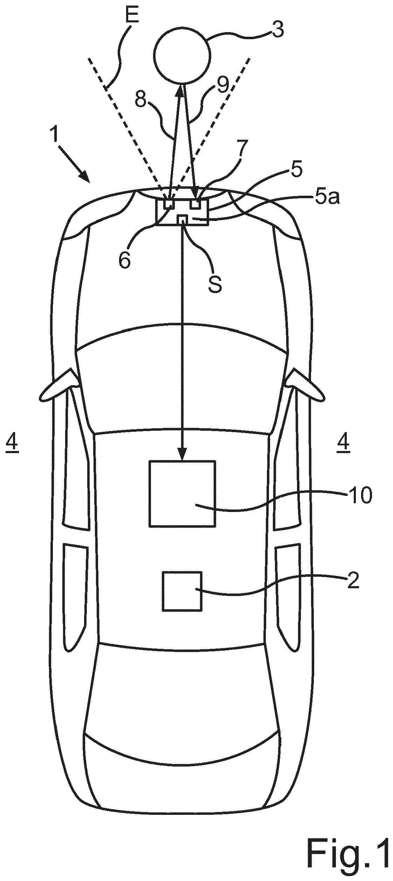

Fig. 1 zeigt ein Kraftfahrzeug 1 gemäß einer Ausführungsform der vorliegenden Erfindung. Das Kraftfahrzeug 1 ist in dem vorliegenden Ausführungsbeispiel als Personenkraftwagen ausgebildet. Das Kraftfahrzeug 1 umfasst ein Fahrerassistenzsystem 2. Mit dem Fahrerassistenzsystem 2 kann beispielsweise ein Objekt 3, welches sich in der Umgebung 4 des Kraftahrzeugs 1 befindet erfasst werden. Insbesondere kann mittels des Fahrerassistenzsystems 2 ein Abstand zwischen dem Kraftahrzeug 1 und dem Objekt 3 bestimmt werden.

Das Fahrerassistenzsystem 2 umfasst zumindest eine Ultraschallsensorvorrichtung 5. Die Ultraschallsensorvorrichtung 5 wiederum weist zumindest einen Ultraschallsensor 5a auf. Der Ultraschallsensor 5a umfasst eine Sendeeinrichtung 6, mittels welcher zumindest ein Ultraschallsignal 8, insbesondere mehrere Ultraschallsignale 8, ausgesendet werden kann/können. Die Ultraschallsensorvorrichtung 5 ist vorliegend an einem Frontbereich des Kraftahrzeugs 1 angeordnet. Die Ultraschallsensorvorrichtung 5 kann auch an anderen Bereichen, beispielsweise an einem Heckbereich oder einem Seitenbereich des Kraftfahrzeugs 1 angeordnet werden. Das folgende Beispiel ist also nicht abschließend zu betrachten, sondern dient lediglich zur Veranschaulichung.

Mit der Sendeeinrichtung 6 können die Ultraschallsignale 8 innerhalb eines vorbestimmten Erfassungsbereichs E bzw. eines vorbestimmten Winkelbereichs, mittels einer Membran, ausgesendet werden.

Darüber hinaus umfasst die Ultraschallsensorvorrichtung 5 eine Empfangseinrichtung 7, mittels welcher reflektierte Ultraschallsignale als Echosignale 9, welche vom Objekt 3 reflektiert wurden, insbesondere über die Membran empfangen werden können. Mit der Empfangseinrichtung 7 können also von dem Objekt 3 reflektierte Ultraschallsignale 9 als Empfangssignal empfangen werden. Ferner kann die Ultraschallsensorvorrichtung 5 eine Steuerungseinrichtung S aufweisen, die beispielsweise durch ein Mikrocontroller und/oder ein digitalen Signalprozessor gebildet sein kann. Das Fahrerassistenzsystem 2 umfasst ferner eine Steuerungseinrichtung 10, die beispielsweise durch ein elektronisches Steuergerät (ECU-electronic control Unit) des Kraftfahrzeugs 1 gebildet sein kann. Die Steuerungseinrichtung 10 ist zur Datenübertragung mit der Ultraschallsensorvorrichtung 5 verbunden. Die Datenübertragung kann beispielsweise über den Datenbus des Kraftfahrzeugs 1 erfolgen.

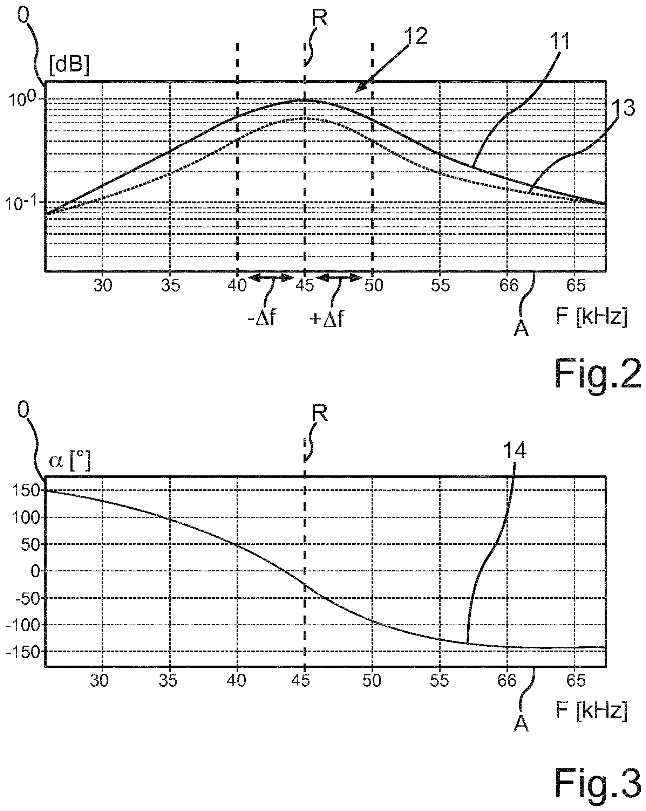

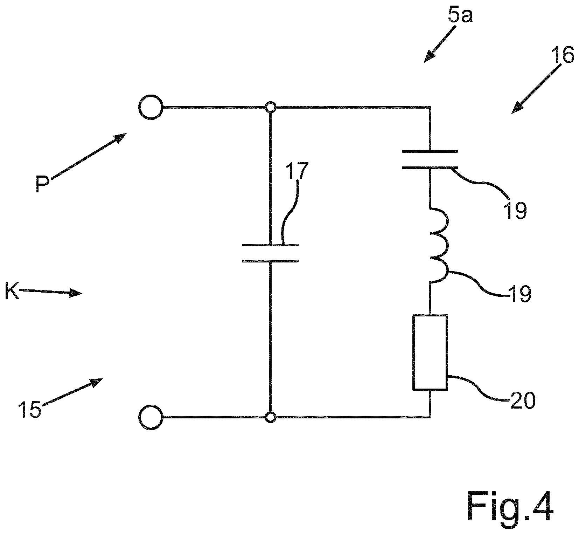

Fig. 2 zeigt ein schematisches Frequenz-Signalstärke-Diagramm zur Bestimmung einer Übertragungsfunktion 13 einer Ausführungsform eines Ultraschallsensors (5a). Auf einer Abszisse A des Diagramms in Fig. 1 ist insbesondere eine Frequenz in [kHz] aufgetragen. Auf einer Ordinate O des Diagramms ist eine Signalstärke in [dB] angegeben. Die Signalstärke ist abhängig von den elektrischen Kenngrößen K (Fig. 4), wie beispielsweise Spannung und Strom. Insbesondere zeigt die Fig. 1, dass die Übertragungsfunktion 13 des Ultraschallsensors 5a einen Peak 12 aufweist, welcher insbesondere bei einer Resonanzfrequenz R des Ultraschallsensors 5a liegt. Bei dem in Fig. 1 gezeigten Beispiel liegt die Resonanzfrequenz R bei etwa 45 kHz. Der Ultraschallsensor 5a wird bevorzugt im Resonanzbetrieb bei der Resonanzfrequenz R betrieben.

Mittels der Übertragungsfunktion 13 aus Fig. 2 kann insbesondere das akustischelektrische Verhalten des Ultraschallsensors 5a dargestellt werden. Insbesondere weist bauartbedingt jeder Ultraschallsensor 5a eine spezifische Übertragungsfunktion 13 auf. Insbesondere kann beispielsweise die spezifische Resonanzfrequenz R des Ultraschallsensors 5a in einem Frequenzband liegen, welches in Fig. 1 durch -Δf und +Δf beispielhaft dargestellt ist. Beispielsweise kann das Frequenzband zwischen 40 kHz und 50 kHz liegen. Insbesondere kann dann die Resonanzfrequenz R des spezifischen Ultraschallsensors 5a in diesem Frequenzband überprüft und bestimmt werden.

Durch äußere Einflüsse, wie zum Beispiel Umwelteinflüsse, Alterung oder sensorbedingte Einflüsse, kann es dazu kommen, dass der Ultraschallsensor 5a eine abweichende Übertragungsfunktion 13 gegenüber einer Referenz-Übertragungsfunktion 11 eines Referenzultraschallsensors aufweist. Insbesondere ist die Übertragungsfunktion 13 unterschiedlich zur Referenz-Übertragungsfunktion 11. Anhand der Übertragungsfunktion 13 gegenüber der Referenz-Übertragungsfunktion 11 kann dann insbesondere ein Funktionszustand des Ultraschallsensors 5a bestimmt werden. Beispielsweise kann bestimmt werden, ob der Ultraschallsensor 5a verschmutzt beziehungsweise vereist ist. Die Übertragungsfunktion 13 wird abhängig von einem elektrischen Prüfsignal P (Fig. 4) bestimmt, wobei der Ultraschallsensor 5a mit dem elektrischen Prüfsignal P angeregt wird. Die elektrische Kenngröße K, welche insbesondere eine Spannung und/oder ein Strom im Ultraschallsensor 5a sein kann, kann dann ausgewertet werden und abhängig davon die Übertragungsfunktion 13 des Ultraschallsensors 5a bestimmt werden. Insbesondere wird dann die Übertragungsfunktion 13 mit der Referenz-Übertragungsfunktion 11 verglichen und abhängig von dem Vergleich kann dann der Funktionszustand des Ultraschallsensors 5a bestimmt werden. Insbesondere kann vorgesehen sein, dass das Prüfsignal P als harmonisches Signal oder als Sprungsignal oder als Impulssignal von einer Steuerungseinrichtung, insbesondere der Steuerungseinrichtung (S) des Ultraschallsensors 5a, erzeugt wird.

Ebenfalls kann vorgesehen sein, dass die Bestimmung des Funktionszustands des Ultraschallsensors 5a bei einer Mehrzahl von Betriebsarten des Kraftfahrzeugs 1, insbesondere bei einem Fahrbetrieb des Kraftfahrzeugs 1, durchgeführt werden kann. Somit kann aktuell der Funktionszustand des Ultraschallsensors 5a bestimmt werden.

Fig. 3 zeigt beispielhaft ein schematisches Frequenz-Impedanz-Diagramm zur Bestimmung eines Impedanzfrequenzgangs 14 des Ultraschallsensors 5a. Insbesondere ist auf der Abszisse A die Frequenz in [kHz] angegeben und auf der Ordinate O ein Phasenwinkel α in [°]. Der Impedanzfrequenzgang 14 weist bei der Resonanzfrequenz R des Ultraschallsensors 5a einen Wendepunkt auf. Insbesondere weist bei der Resonanzfrequenz R die Impedanz einen Phasenwinkel α von 0 auf.

Insbesondere ist vorgesehen, dass die Übertragungsfunktion 13 mittels des Impedanzfrequenzgangs 14 bestimmt wird, wobei durch den Impedanzfrequenzgang 14 die elektrische Kenngröße K, insbesondere als Strom und/oder Spannung in Abhängigkeit des Phasenwinkels α zueinander, beschrieben ist. Beispielsweise kann dann der Impedanzfrequenzgang 14 in Abhängigkeit von einem eingeprägten Strom als elektrisches Prüfsignal P, einer davon abhängigen gemessenen Spannung als elektrische Kenngröße K und des als elektrische Kenngröße K ausgebildeten Phasenwinkels α des eingeprägten Stroms zur gemessenen Spannung bestimmt werden. Ebenfalls möglich ist, dass der Impedanzfrequenzgang 14 abhängig von einer eingeprägten Spannung als elektrisches Prüfsignal P, einem davon abhängigen gemessenen Strom als elektrische Kenngröße K und des als elektrische Kenngröße K ausgebildeten Phasenwinkels α der eingeprägten Spannung zum gemessenen Strom bestimmt werden.

Fig. 4 zeigt ein schematisches Ersatzschaltbild einer Ausführungsform des Ultraschallsensors 5a als ein elektrisches Modell 15 des Ultraschallsensors 5a. Insbesondere beschreibt das elektrische Modell 15 den mechanischen Ultraschallwandler 5a elektrisch. Insbesondere weist das elektrische Modell 15 eine Mehrzahl an Bauelementen 16 auf.

Insbesondere weist das elektrische Modell 15 einen ersten Kondensator 17, einen zweiten Kondensator 18, eine Induktivität 19 und einen ohmschen Widerstand 20 auf. Insbesondere sind Parameterwerte der Bauelemente 16 derart ausgebildet, dass sie durch die Übertragungsfunktion 13 charakterisiert werden. Insbesondere ist vorgesehen, dass im elektrischen Modell 15 der zweite Kondensator 18, die Induktivität 19 und der ohmsche Widerstand 20 in Serie geschaltet sind und parallel zu dieser Serienschaltung der erste Kondensator 17 geschaltet ist.

Insbesondere ist durch den ersten Kondensator 17 eine physikalische Kapazität des Ultraschallsensors 5a, beispielsweise die Keramik eines Piezo-Ultraschallsensors, beschrieben. Mittels des zweiten Kondensators 18 kann beispielsweise eine mechanische Nachgiebigkeit, welche dem Reziprokwet der Steifigkeit entspricht, einer Membran des Ultraschallsensors 5a beschrieben werden. Mittels der Induktivität 19 kann insbesondere eine bewegende Masse der Membran beschrieben werden. Mittels des ohmschen Widerstands 20 kann insbesondere eine Dämpfung des Ultraschallsignals 8 beschrieben werden. Insbesondere kann mittels der physikalischen Kapazität, der mechanischen Nachgiebigkeit der bewegenden Masse und der Dämpfung der zumindest eine Funktionszustand des Ultraschallsensors 5a bestimmt werden.

Beispielsweise kann sich bei einer defekten Keramik die Kapazität des ersten Kondensators 17 verringern, sodass durch eine Verringerung der ersten Kapazität auf einen Defekt der Keramik schließen lässt. Sollte beispielsweise Eis auf der Membran des Ultraschallsensors 5a sein, so kann sich beispielsweise die mechanische Nachgiebigkeit und die bewegende Masse verändern, sodass im elektrischen Modell 15 eine Veränderung des zweiten Kondensators 16, bzw. eine Veränderung der Kapazität des zweiten Kondensators 16, und eine Veränderung der Induktivität 19 zu verzeichnen ist.

Anhand der Parameterwertänderungen kann dann auf den Funktionszustand des Ultraschallsensors 5a Rückschluss gezogen werden.

Insbesondere ist vorgesehen, dass die Parameterwerte der Bauelemente 16 mittels einer Parameterwertanpassung, insbesondere mittels einer numerischen Optimierung, derart bestimmt werden, dass sie sich mit diesen angepassten Parameterwerten die Übertragungsfunktion 13 modellmäßig ergibt.

Insbesondere können dann die Referenz-Übertragungsfunktion 11 und/oder Parameterwerte eines die Referenz-Übertragungsfunktion 11 ergebenden Referenzultraschallsensors für eine Mehrzahl von potentiellen Funktionszuständen auf einem Speichermedium der Ultraschallsensorvorrichtung 5 abgespeichert werden. Somit können dann die einzelnen Parameterwerte der Bauelemente 16 mit den Parameterwerten der Bauelemente des Referenzultraschallsensors verglichen werden und dadurch auf den im Speicher abgespeicherten Informationen Rückschlüsse auf die Umweltbedingungen, die Sensorbedingungen bzw. die Alterung des Ultraschallsensors 5a gezogen werden.

Insbesondere kann vorgesehen sein, dass eine Information zumindest eines weiteren Sensors, wie beispielsweise eines Temperatursensors und/oder eines Luftfeuchtigkeitssensors und/oder weiterer Sensorarten, bei der Funktionszustandsbestimmung mit berücksichtigt wird. Der zumindest eine weitere Sensor kann Teil des Ultraschallsensors 5a und/oder der Ultraschallsensorvorrichtung 5 und/oder des Kraftfahrzeugs 1 sein.

Insbesondere ist vorgesehen, dass somit die Übertragungsfunktion 13 des Ultraschallsensors 5a direkt und somit sensorintern - ohne ausgesendete Ultraschallsignale und empfangene Echosignale zu senden und auszuwerten - gemessen wird und anhand der Übertragungsfunktion 13 der Funktionszustand des Ultraschallsensors 5a bestimmt wird. Dazu wird der Ultraschallsensor 5a mittels des elektrischen Prüfsignals P angeregt. Mittels des elektrischen Prüfsignals P wird dann die elektrische Kenngröße K des Ultraschallsensors 5a beeinflusst und durch den Ultraschallsensor 5a ausgewertet. Abhängig von der elektrischen Kenngröße K, welche insbesondere im Impedanzfrequenzgang 14 zu erkennen ist, wird die Übertragungsfunktion 13 bestimmt. Das bereitgestellte elektrische Modell 15 mit seinen Bauelementen 16 wird durch Parameterwertanpassung an die bestimmte Übertragungsfunktion 13 angepasst, so dass die Bauelemente 16 die

Übertragungsfunktion 13 charakterisieren. Die angepassten Parameterwerte werden dann mit Referenzparameterwerten eines Referenzultraschallsensors verglichen und auf Basis des Vergleichs werden dann Rückschlüsse auf den Funktionszustand des Ultraschallsensors 5a gezogen.

## Patentansprüche

1. Verfahren zum Bestimmen eines Funktionszustands eines Ultraschallsensors (5a) einer Ultraschallsensorvorrichtung (5) für ein Kraftfahrzeug (1), welche zum Aussenden eines Ultraschallsignals (8) in eine Umgebung (4) des Kraftfahrzeugs (1) und/oder zum Empfangen eines Echosignals (9) des Ultraschallsignals (8) ausgebildet ist,
**dadurch gekennzeichnet, dass** ein elektrisches Prüfsignal (P) erzeugt wird, welches sich von einem Anregungssignal, durch das ein ausgesendetes Ultraschallsignal (8) erzeugt wird, unterscheidet, und welches an den Ultraschallsensor (5a) angelegt wird, dass eine Amplitude des Prüfsignals (P) kleiner ist als eine Amplitude des Anregungssignals, dass zumindest eine durch das elektrische Prüfsignal (P) beeinflusste elektrische Kenngröße (K) des Ultraschallsensors (5a) ausgewertet wird und abhängig davon eine Übertragungsfunktion (13) des Ultraschallsensors (5a) bestimmt wird, die mit einer Referenz-Übertragungsfunktion (11) verglichen wird und abhängig von dem Vergleich der Funktionszustand des Ultraschallsensors (5a) bestimmt wird.

2. Verfahren nach Anspruch 1,
**dadurch gekennzeichnet, dass**
das Prüfsignal (P) als harmonisches Signal oder als Sprungsignal oder als Impulssignal von einer Steuerungseinrichtung (S) erzeugt wird.

3. Verfahren nach Anspruch 1 oder 2,
**dadurch gekennzeichnet, dass**
die Übertragungsfunktion (13) abhängig von einem Impedanzfrequenzgang (14) bestimmt wird.

4. Verfahren nach Anspruch 3,
**dadurch gekennzeichnet, dass**
der Impedanzfrequenzgang (14) in Abhängigkeit von einem eingeprägten Strom als elektrisches Prüfsignal (P), einer davon abhängigen gemessenen Spannung als elektrische Kenngröße (K) und eines als elektrische Kenngröße (K) ausgebildeten Phasenwinkels (α) des eingeprägten Stroms zur gemessenen Spannung bestimmt wird.

5. Verfahren nach Anspruch 3,
**dadurch gekennzeichnet, dass**
der Impedanzfrequenzgang (14) in Abhängigkeit von einer eingeprägten Spannung als elektrisches Prüfsignal (P), einem davon abhängigen gemessenen Strom als elektrische Kenngröße (K) und eines als elektrische Kenngröße (K) ausgebildeten Phasenwinkels (α) der eingeprägten Spannung zum gemessenen Strom bestimmt wird.

6. Verfahren nach einem der vorhergehenden Ansprüche,
**dadurch gekennzeichnet, dass**
die Übertragungsfunktion (13) bei einer Resonanzfrequenz (R) des Ultraschallsensors (5a) bestimmt wird.

7. Verfahren nach einem der vorhergehenden Ansprüche,
**dadurch gekennzeichnet, dass**
eine Mehrzahl von Übertragungsfunktionen (13) bei einer Mehrzahl von Schallfrequenzen bestimmt wird, wobei die Mehrzahl von den Schallfrequenzen in einem Frequenzband zwischen einem +/- Δf um die Resonanzfrequenz (R) erzeugt werden.

8. Verfahren nach einem der vorhergehenden Ansprüche,
**dadurch gekennzeichnet, dass**
ein elektrisches Modell (15) des Ultraschallsensors (5a) mit einer Mehrzahl von elektrischen Bauelementen (16) erzeugt wird, wobei das elektrische Modell (15) den mechanischen Ultraschallsensor (5a) elektrisch beschreibt, wobei Parameterwerte des elektrischen Modells (15) durch die Übertragungsfunktion (13) charakterisiert werden.

9. Verfahren nach Anspruch 8,
**dadurch gekennzeichnet, dass**
das elektrische Modell (15) des Ultraschallsensors (5a) und/oder eines Referenzultraschallsensors durch einen ersten Kondensator (17), einen zum ersten Kondensator (17) separaten zweiten Kondensator (18), eine Induktivität (19) und ein ohmschen Widerstand (20) gebildet wird, wobei der zweite Kondensator(18), die Induktivität (19) und der ohmsche Widerstand (20) in Serie verschaltet werden und der erste Kondensator (17) parallel zu der Serienschaltung geschaltet wird.

10. Verfahren nach Anspruch 9,
**dadurch gekennzeichnet, dass**
eine physikalische Kapazität des Ultraschallsensors (5a) mittels des ersten Kondensators (17), eine mechanische Nachgiebigkeit einer Membran des Ultraschallsensors (5a) mittels des zweiten Kondensators (18), eine bewegende Masse der Membran durch die Induktivität (19) und eine Dämpfung des Ultraschallsignals (8)mittels des ohmschen Widerstands (20) beschrieben werden.

11. Verfahren nach einem der Ansprüche 9 5 oder 6,
**dadurch gekennzeichnet, dass**
jeweilige Parameterwerte der ersten Kapazität (17), der zweiten Kapazität (18), der Induktivität (19) und des ohmschen Widerstands (20) des Ultraschallsensors (5a) mittels einer Parameterwertanpassung, insbesondere mittels einer numerischen Optimierung, derart bestimmt werden, dass sich mit diesen angepassten Parameterwerten die Übertragungsfunktion (13) modellmäßig ergibt.

12. Verfahren nach einem der vorhergehenden Ansprüche,
**dadurch gekennzeichnet, dass**
die Referenz-Übertragungsfunktion (11) und/oder Parameterwerte eines die Referenz-Übertragungsfunktion (11) ergebenden Referenzultraschallsensors für eine Mehrzahl an potentiellen Funktionszuständen auf einem Speichermedium der Ultraschallsensorvorrichtung (5) abgespeichert werden.

13. Verfahren nach einem der vorhergehenden Ansprüche,
**dadurch gekennzeichnet, dass**
das Verfahren bei einer Mehrzahl von Betriebsarten des Kraftfahrzeugs (1), insbesondere bei einem Fahrbetrieb des Kraftfahrzeugs (1), durchgeführt werden kann.

14. Verfahren nach einem der vorhergehenden Ansprüche,
**dadurch gekennzeichnet, dass**
die Bestimmung des Funktionszustands des Ultraschallsensors (5a) sensorintern durchgeführt wird.

15. Verfahren nach einem der vorhergehenden Ansprüche,
**dadurch gekennzeichnet, dass**
in einem ersten Betriebszustand des Ultraschallsensors (5a) zumindest ein Ultraschallsignal (8) ausgesendet und ein Echosignal (9) empfangen wird und in einem vom ersten Betriebszustand unterschiedlichen zweiten Betriebszustand des Ultraschallsensors (5a) eine Selbst-Diagnose des Ultraschallsensors (5a) durch Anlegen des elektrischen Prüfsignals (P) durchgeführt wird.

16. Verfahren nach einem der Ansprüche 1 bis 15, **dadurch gekennzeichnet, dass** eine Bandbreite des Prüfsignals (P) größer ist als eine Bandbreite des Anregungssignals.

17. Ultraschallsensorvorrichtung (5) mit zumindest einem Ultraschallsensor (5a) für ein Kraftfahrzeug (1) mit einer Sendeeinrichtung (6) zum Senden von Ultraschallsignalen (8), mit einer Empfangseinrichtung (7) zum Empfangen eines Echosignals (9) der Ultraschallsignale (8) und mit einer Steuerungseinrichtung (S) des Ultraschallsensors (5a), welche dazu ausgebildet ist, ein Verfahren nach einem der Ansprüche 1 bis 16 durchzuführen.

18. Kraftfahrzeug (1) mit einer Ultraschallsensorvorrichtung (5) nach Anspruch 17.

## Claims

1. Method for determining a functional state of an ultrasonic sensor (5a) of an ultrasonic sensor device (5) for a motor vehicle (1), which is designed to emit an ultrasonic signal (8) into an environment (4) of the motor vehicle (1) and/or to receive an echo signal (9) of the ultrasonic signal (8),
**characterized in that** an electrical test signal (P) is generated, which differs from an excitation signal used to generate an emitted ultrasonic signal (8) and is applied to the ultrasonic sensor (5a), **in that** an amplitude of the test signal (P) can be smaller than an amplitude of the excitation signal, **in that** at least one electrical characteristic parameter (K) of the ultrasonic sensor (5a) affected by the electrical test signal (P) is evaluated and as a function thereof a transfer function (13) of the ultrasonic sensor (5a) is determined, which is compared with a reference transfer function (11), and the functional state of the ultrasonic sensor (5a) is determined depending on the comparison.

2. Method according to Claim 1,
**characterized in that**
the test signal (P) is generated as a harmonic signal or as a step signal or as a pulse signal by a control device (S).

3. Method according to Claim 1 or 2,
**characterized in that**
the transfer function (13) is determined as a function of an impedance frequency response (14).

4. Method according to Claim 3,
**characterized in that**
the impedance frequency response (14) is determined as a function of an injected current as an electrical test signal (P), of a measured voltage which is dependent thereon as an electrical characteristic parameter (K), and of a phase angle (α) of the injected current relative to the measured voltage, which is implemented as an electrical characteristic parameter (K).

5. Method according to Claim 3,
**characterized in that**
the impedance frequency response (14) is determined as a function of an injected voltage as an electrical test signal (P), of a measured current which is dependent thereon as an electrical characteristic parameter (K), and of a phase angle (α) of the injected voltage relative to the measured current, which is implemented as an electrical characteristic parameter (K).

6. Method according to any one of the preceding claims,
**characterized in that**
the transfer function (13) is determined at a resonance frequency (R) of the ultrasonic sensor (5a) .

7. Method according to any one of the preceding claims,
**characterized in that**
a multiplicity of transfer functions (13) is determined at a multiplicity of acoustic frequencies, wherein the multiplicity of the acoustic frequencies is generated in a frequency band between +/- Δf around the resonance frequency (R).

8. Method according to any one of the preceding claims,
**characterized in that**
an electrical model (15) of the ultrasonic sensor (5a) is generated with a multiplicity of electrical components (16), wherein the electrical model (15) electrically describes the mechanical ultrasonic sensor (5a), parameter values of the electrical model (15) being **characterized by** the transfer function (13) .

9. Method according to Claim 8,
**characterized in that**
the electrical model (15) of the ultrasonic sensor (5a) and/or a reference ultrasonic sensor is formed by a first capacitor (17), a second capacitor (18) separate to the first capacitor (17), an inductor (19) and an ohmic resistor (20), the second capacitor (18), the inductor (19) and the ohmic resistor (20) being connected in series and the first capacitor (17) being connected in parallel with the series circuit.

10. Method according to Claim 9,
**characterized in that**
a physical capacitance of the ultrasonic sensor (5a) is described by means of the first capacitor (17), a mechanical compliance of a diaphragm of the ultrasonic sensor (5a) by means of the second capacitor (18), a moving mass of the diaphragm by means of the inductor (19) and a damping of the ultrasonic signal (8) by means of the ohmic resistor (20) .

11. Method according to any one of Claims 5 or 6,
**characterized in that**
relevant parameter values of the first capacitor (17), the second capacitor (18), the inductor (19) and of the ohmic resistor (20) of the ultrasonic sensor (5a) are determined by means of a parameter value adjustment, in particular by means of a numerical optimization, in such a way that by using these adjusted parameter values the transfer function (13) is obtained in the form of a model.

12. Method according to any one of the preceding claims,
**characterized in that**
the reference transfer function (11) and/or parameter values of a reference ultrasonic sensor that produces the reference transfer function (11) are stored on a storage medium of the ultrasonic sensor device (5) for a multiplicity of potential functional states.

13. Method according to any one of the preceding claims,
**characterized in that**
the method can be implemented in a multiplicity of modes of operation of the motor vehicle (1), in particular during a driven operation of the motor vehicle (1).

14. Method according to any one of the preceding claims,
**characterized in that**
the functional state of the ultrasonic sensor (5a) is determined inside the sensor.

15. Method according to any one of the preceding claims,
**characterized in that**
at least one ultrasonic signal (8) is emitted and an echo signal (9) is received in a first operating state of the ultrasonic sensor (5a), and a self-diagnosis of the ultrasonic sensor (5a) is performed by applying the electrical test signal (P) in a second operating state, different from the first operating state, of the ultrasonic sensor (5a).

16. Method according to any one of Claims 1 to 15,
**characterized in that** a bandwidth of the test signal (P) is greater than a bandwidth of the excitation signal.

17. Ultrasonic sensor device (5) with at least one ultrasonic sensor (5a) for a motor vehicle (1), having a transmitting device (6) for transmitting ultrasonic signals (8), a receiving device (7) for receiving an echo signal (9) of the ultrasonic signals (8), and having a control device (S) of the ultrasonic sensor (5a) which is designed to implement a method according to any one of Claims 1 to 16.

18. Motor vehicle (1) having an ultrasonic sensor device (5) according to Claim 17.

## Revendications

1. Procédé pour déterminer un état de fonctionnement d'un capteur à ultrasons (5a) d'un arrangement de capteur à ultrasons (5) pour un véhicule automobile (1), lequel est configuré pour émettre un signal ultrasonore (8) dans un environnement (4) du véhicule automobile (1) et/ou pour recevoir un signal d'écho (9) du signal ultrasonore (8),
**caractérisé en ce qu'**un signal de contrôle (P) électrique est généré, lequel se différencie d'un signal d'excitation, par lequel est généré un signal ultrasonore (8) émis, et lequel est appliqué au capteur à ultrasons (5a), **en ce qu'**une amplitude du signal de contrôle (P) est inférieure à une amplitude du signal d'excitation, **en ce qu'**au moins une grandeur caractéristique (K) électrique du capteur à ultrasons (5a) influencée par le signal de contrôle (P) électrique est interprétée et une fonction de transfert (13) du capteur à ultrasons (5a) est interprétée en fonction de celle-ci, laquelle est comparée à une fonction de transfert de référence (11) et l'état de fonctionnement du capteur à ultrasons (5a) est déterminé en fonction de la comparaison.

2. Procédé selon la revendication 1, **caractérisé en ce que** le signal de contrôle (P) est généré par un dispositif de commande (S) sous la forme d'un signal harmonique ou sous la forme d'un signal carré ou sous la forme d'un signal impulsionnel.

3. Procédé selon la revendication 1 ou 2, **caractérisé en ce que** la fonction de transfert (13) est déterminée en fonction d'une réponse en fréquence d'impédance (14).

4. Procédé selon la revendication 3, **caractérisé en ce que** la réponse en fréquence d'impédance (14) est déterminée en fonction d'un courant imprimé en tant que signal de contrôle (P) électrique, d'une tension mesurée dépendante de celui-ci en tant que grandeur caractéristique (K) électrique et d'un angle de phase (α) du courant imprimé par rapport à la tension mesurée réalisé en tant que grandeur caractéristique (K) électrique.

5. Procédé selon la revendication 3, **caractérisé en ce que** la réponse en fréquence d'impédance (14) est déterminée en fonction d'une tension imprimée en tant que signal de contrôle (P) électrique, d'un courant mesuré dépendant de celle-ci en tant que grandeur caractéristique (K) électrique et d'un angle de phase (α) de la tension imprimée par rapport au courant mesuré réalisé en tant que grandeur caractéristique (K) électrique.

6. Procédé selon l'une des revendications précédentes, **caractérisé en ce que** la fonction de transfert (13) est déterminée à une fréquence de résonance (R) du capteur à ultrasons (5a).

7. Procédé selon l'une des revendications précédentes, **caractérisé en ce qu'**une pluralité de fonctions de transfert (13) sont déterminées à une pluralité de fréquences sonores, la pluralité de fréquences sonores étant générées dans une bande de fréquences entre un +/Δf autour de la fréquence de résonance (R).

8. Procédé selon l'une des revendications précédentes, **caractérisé en ce qu'**un modèle électrique (15) du capteur à ultrasons (5a) est généré avec une pluralité de composants électriques (16), le modèle électrique (15) décrivant électriquement le capteur à ultrasons (5a) mécanique, des valeurs de paramètres du modèle électrique (15) étant **caractérisées par** la fonction de transfert (13) .

9. Procédé selon la revendication 8, **caractérisé en ce que** le modèle électrique (15) du capteur à ultrasons (5a) et/ou d'un capteur à ultrasons de référence est formé par un premier condensateur (17), un deuxième condensateur (18) distinct du premier condensateur (17), une inductance (19) et une résistance ohmique (20), le deuxième condensateur (18), l'inductance (19) et la résistance ohmique (20) étant branchés en série et le premier condensateur (17) étant branché en parallèle avec le circuit série.

10. Procédé selon la revendication 9, **caractérisé en ce qu'**une capacité physique du capteur à ultrasons (5a) est décrite au moyen du premier condensateur (17), une flexibilité mécanique d'une membrane du capteur à ultrasons (5a) au moyen du deuxième condensateur (18), une masse déplacée de la membrane par l'inductance (19) et un amortissement du signal ultrasonore (8) au moyen de la résistance ohmique (20).

11. Procédé selon l'une des revendications 9, 5 ou 6, **caractérisé en ce que** les valeurs de paramètres respectives du premier condensateur (17), du deuxième condensateur (18), de l'inductance (19) et de la résistance ohmique (20) du capteur à ultrasons (5a) sont déterminées au moyen d'une adaptation de valeur de paramètre, notamment au moyen d'une optimisation numérique, de telle sorte que la fonction de transfert (13) est obtenue avec ces valeurs de paramètres adaptées à la manière d'un modèle.

12. Procédé selon l'une des revendications précédentes, **caractérisé en ce que** la fonction de transfert de référence (11) et/ou les valeurs de paramètres d'un capteur à ultrasons de référence produisant la fonction de transfert de référence (11) sont mémorisées pour une pluralité d'états de fonction sur un support de mémorisation de l'arrangement de capteur à ultrasons (5).

13. Procédé selon l'une des revendications précédentes, **caractérisé en ce que** le procédé peut être mis en œuvre avec une pluralité de modes de fonctionnement du véhicule automobile (1), notamment avec un régime de déplacement du véhicule automobile (1).

14. Procédé selon l'une des revendications précédentes, **caractérisé en ce que** la détermination de l'état de fonctionnement du capteur à ultrasons (5a) est effectuée de manière interne au capteur.

15. Procédé selon l'une des revendications précédentes, **caractérisé en ce que** dans un premier état opérationnel du capteur à ultrasons (5a), au moins un signal ultrasonore (8) est émis et un signal d'écho (9) est reçu et, dans un deuxième état opérationnel du capteur à ultrasons (5a), différent du premier état opérationnel, un autodiagnostic du capteur à ultrasons (5a) est effectué par application du signal de contrôle (P) électrique.

16. Procédé selon l'une des revendications 1 à 15, **caractérisé en ce qu'**une largeur de bande du signal de contrôle (P) est supérieure à une largeur de bande du signal d'excitation.

17. Arrangement de capteur à ultrasons (5) comprenant au moins un capteur à ultrasons (5a) pour un véhicule automobile (1), comprenant un dispositif d'émission (6) destiné à émettre des signaux ultrasonores (8), comprenant un dispositif de réception (7) destiné à recevoir un signal d'écho (9) des signaux ultrasonores (8) et comprenant un dispositif de commande (S) du capteur à ultrasons (5a), lequel est configuré pour mettre en œuvre un procédé selon l'une des revendications 1 à 16.

18. Véhicule automobile (1) comprenant un arrangement de capteur à ultrasons (5) selon la revendication 17.
